# EUROPÄISCHE PATENTSCHRIFT

(11) **EP 0 753 436 B1**
(45) Veröffentlichungstag und Bekanntmachung des Hinweises auf die Patenterteilung: **08.09.1999**
(21) Anmeldenummer: 96109345.7
(22) Anmeldetag: 11.06.1996
(51) Int. Cl.: B60R 22/44, F16G 11/00, B65H 69/04

(54) **Verfahren und Vorrichtung zum Befestigen des Endes eines Fadens an einer Fadenrolle und Fadenrolle mit darauf aufgewickeltem Faden**
Process and device to attach the end of a filament on a pulley and pulley with a filament wound on it
Procédé et dispositif pour attacher l'extrémité d'un fil à une poulie comportant un fil enroulé sur celle-ci

(30) Priorität: 10.07.1995 DE 19525076
(43) Veröffentlichungstag der Anmeldung: 15.01.1997
(73) Patentinhaber: TAKATA (EUROPE) VEHICLE SAFETY TECHNOLOGY GmbH, D-89081 Ulm (DE)
(72) Erfinder: Kopetzky, Robert, 89173 Lonsee (DE); Müller, Frank, 89134 Blaustein (DE); Diepold, Ulrich, 89081 Ulm (DE); Dreizler, Sabine, 70619 Stuttgart (DE); Pietschmann, Frank, 89567 Sontheim (DE); Pleyer, Matthias, 89250 Ulm (DE)
(74) Vertreter: Manitz, Gerhart, Dr.

(56) Entgegenhaltungen:
- EP-A- 0 581 228
- FR-A- 995 376
- GB-A- L26 357
- US-A- 4 525 002
- "COURS DE NAVIGATION DES GL NANS, nouvelle édition" 1982 , DITIONS DU SEUIL , FRANCE XP002012550 * Seite 174-175 , Absatz "Deux demi-clefs à capeler" und entsprechenden Abbildungen *

## Beschreibung

Die Erfindung betrifft ein Verfahren und eine Vorrichtung zum Befestigen des Endes eines unter Zugspannung stehenden Fadens an einer Fadenrolle gemäß den Oberbegriffen der Patentansprüche 1 und 4. Weiter ist Gegenstand der Erfindung eine Fadenrolle nach dem Oberbegriff des Anspruches 6.

Die Erfindung wird insbesondere angewandt bei der Befestigung der Fäden von Fadenrollen bei federangetriebenen Aufrollern für Sicherheitsgurte bei Kraftfahrzeugen, wie sie z.B. aus der EP 0 581 228 A1 bekannt sind.

Bei derartigen Gurtaufrollern steht der auf die beiden Fadenrollen aufgewickelte Faden während der gesamten Lebensdauer des Fahrzeugs unter einer gewissen Zugspannung, die beim Gebrauch des Sicherheitsgurtes auch laufenden Veränderungen unterworfen ist. Aufgrund der ständigen Beanspruchung auch durch wechselnde Kräfte kommt es bei derartigen Fadenrollen entscheidend darauf an, daß der Faden an den Fadenrollen so befestigt ist, daß insbesondere an diesen Befestigungsstellen keine Bruchgefahr besteht.

Das Ziel der vorliegenden Erfindung besteht somit darin, ein Verfahren und eine Vorrichtung der eingangs genannten Gattung sowie eine Fadenrolle zu schaffen, bei denen eine einwandfreie, auch über lange Betriebszeiten sicher haltende Befestigung des Fadenendes an den Fadenrollen gewährleistet ist, ohne daß auch bei starken Lastwechseln an der kritischen Befestigungsstelle Beanspruchungen auf den Faden wirken, die zu einem Fadenbruch führen können. Weiter soll eine wirtschaftliche Montage auch in Massenfertigung möglich sein.

Zur Lösung dieser Aufgabe sieht die Erfindung die Merkmale der kennzeichnenden Teile der Patentansprüche 1,4 und 6 vor.

Der Erfindungsgedanke ist also darin zu sehen, auf einem an der Fadenrolle vorgesehenen und vorzugsweise mit einem Kopf ausgestatteten Haltestift zumindest zwei, vorzugsweise jedoch drei bis vier selbsthemmende Fadenschlaufen vorzusehen, wodurch bei Herstellung der Verbindung zwischen Fadenende und Haltestift keinerlei Maßnahmen, wie Erhitzung, Kleben oder dergl., erforderlich werden, die zu einer Beeinträchtigung der Fadeneigenschaften führen könnten. Aufgrund der erfindungsgemäßen Schlaufenbildung erfolgt der Einlauf der Fadenenden an den Haltestift, der abgerundet und vorzugsweise kreisrund ist und einen nicht zu kleinen Durchmesser aufweist, auf stetig gekrümmte Flächen, so daß eine Knickbeanspruchung des Fadens vermieden wird. Durch eine geeignete Durchmesserwahl für den auch in axialer Richtung glatten Haltestift kann die Krümmung des Fadens am Haltestift auf Werte begrenzt werden, die keine Festigkeitsminderung des herumgewickelten Fadens zur Folge haben. Bevorzugt sollte das Durchmesserverhältnis von Haltestift und Faden mindestens 10:1 oder noch mehr betragen.

Die Maßnahmen nach den Ansprüchen 1 und 4 dienen dazu, die selbsthemmenden Schlaufen insbesondere maschinell und automatisch auf dem Haltestift auszubilden. Wegen der geforderten Selbsthemmung und auch des erforderlichen Zusammenziehens jeder einzelnen Schlaufe werden die durch eine geeignete Bewegung des Montagestiftes aus dem unter leichter Spannung stehenden Faden gebildeten Schlaufen einzeln nacheinander auf den Haltestift geschoben. Wegen der leichten Spannung wird jede auf den Haltestift geschobene Schlaufe individuell so gespannt, daß sie sicher und nicht weiter nachgebend auf dem Haltestift sitzt. Anschließend kann dann die nächste Schlaufe gebildet und auf die bereits fest auf dem Haltestift sitzende erste Schlaufe aufgeschoben sowie festgezogen werden.

Grundsätzlich genügen bereits zwei Schlaufen für eine selbsthemmende Halterung des Fadenendes auf der Fadenrolle. Erfindungsgemäß werden jedoch drei bis vier aufeinandergesetzte Schlaufen bevorzugt.

Die Erfindung wird im folgenden beispielsweise anhand der Zeichnung beschrieben; in dieser zeigt:
- Fig. 1: eine teilweise geschnittene schematische Wiedergabe eines federangetriebenen Gurtaufrollers für Sicherheitsgurte bei Kraftfahrzeugen, wobei der für die Übertragung der Rückzugskraft verwendete Faden in der erfindungsgemäßen Weise an den Fadenrollen befestigt ist,
- Fig. 2: eine perspektivische Ansicht der Fadenrollen nach Fig. 1 mit dem aufgewickelten Faden und der erfindungsgemäßen Befestigung,
- Fig. 3: eine Stirnansicht des Gegenstandes der Fig. 2 mit zwei Möglichkeiten der Führung des Fadens von einer Fadenrolle zur anderen,
- Fig. 4: eine Seitenansicht einer weiteren Ausführungsform der Fadenrollen bei einem Aufroller nach Fig. 1,
- Fig. 5: eine vergrößerte Umfangsteilansicht einer der Fadenrollen nach den vorangehenden Ausführungsbeispielen in Axialrichtung im Bereich der Befestigungsstelle für den Faden, wobei außerdem der Montagestift und der Abstreifer der erfindungsgemäßen Befestigungsvorrichtung während der Ausbildung einer ersten Schlaufe wiedergegeben sind,
- Fig. 6: eine Ansicht analog Fig. 5 bei durch den Abstreifer auf den Haltestift überführter erster Schlaufe,
- Fig. 7: den Vorgang der Bildung einer zweiten Schlaufe,
- Fig. 8: die Überführung der zweiten Schlaufe auf den Haltestift,
- Fig. 9: den Vorgang der Bildung einer dritten Schlaufe auf dem Montagestift und
- Fig. 10: die Überführung auch der dritten Schlaufe auf den Haltestift der Fadenrolle.

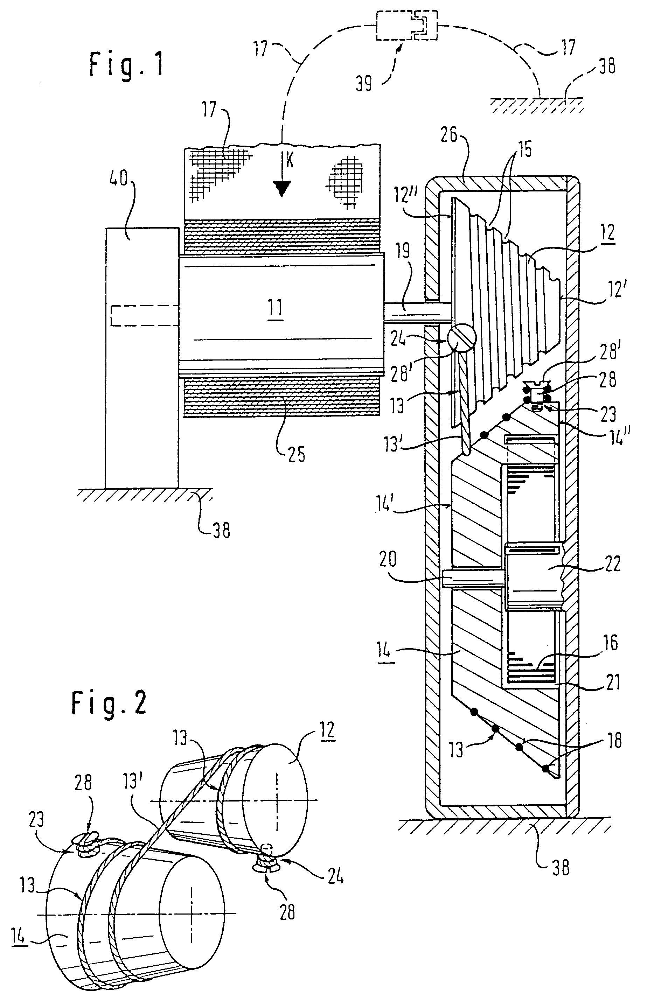

Nach Fig. 1 weist ein erfindungsgemäßer Gurtaufroller eine Gurtrolle 11 auf, auf die ein nur mit einem kurzen Stück angedeuteter Sicherheitsgurt 17 aufwickelbar ist, der in der gestrichelt angedeuteten Weise über ein übliches Gurtschloß 39 um den Körper eines nicht dargestellten Fahrzeuginsassen herum zum Fahrzeugchassis 38 geführt und dort befestigt ist. Die Erfindung ist aber nicht nur bei Zwei-, sondern auch bei Dreipunktgurten anwendbar. Die Gurtrolle 11 ist mittels einer Drehwelle 19 drehbar an einem Gehäuse 26 gelagert, welches seinerseits unten am Fahrzeugchassis 38 befestigt ist. An dem von der Gurtrolle 11 abgewandten Ende der Drehwelle 19 ist innerhalb des Gehäuses 26 eine konisch ausgebildete Fadenrolle 12 mit einer kleinen und einer großen Stirnfläche 12' bzw. 12'' angeordnet, welche auf ihrem Umfang mit einer wendelförmigen Führungsrille 15 versehen ist. Auf der von der Fadenrolle 12 abgewandten Stirnseite der Gurtrolle 11 ist nur rein schematisch eine Gurtauszugs-Sperrvorrichtung 40 angedeutet, welche am Fahrzeugchassis 38 befestigt ist und das weitere Ausziehen des Gurtes 17 bei unfallbedingten Beschleunigungen und/oder einem zu plötzlichen Ausziehen des Sicherheitsgurtes 17 verhindert.

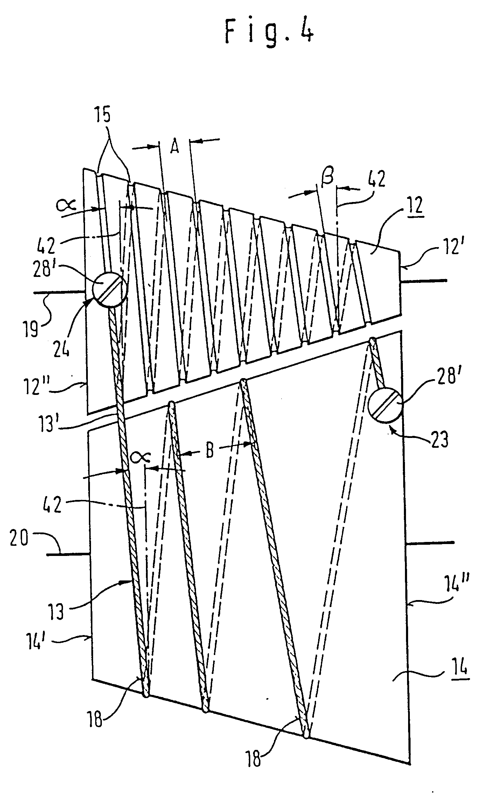

Nach Fig. 1 und 4 ist neben der Fadenrolle 12 mit paralleler Achse 20 und seitlich ausgerichtet eine weitere, eine kleine und eine große Stirnfläche 14' bzw. 14'' aufweisende Fadenrolle 14 vorgesehen, welche gegenläufig zu der ersten Fadenrolle 12 konisch verläuft und deren kleinerer Durchmesser gleich dem größeren Durchmesser der ersten Fadenrolle 12 ist. Die in Fig. 1 linke große Stirnfläche 12'' und rechte kleine Stirnfläche 12' der kleinen Fadenrolle 12 liegt im wesentlichen in einer Ebene mit der linken kleinen Stirnfläche 14' und rechten großen Stirnfläche 14'' der großen Fadenrolle 14. Auch die zweite Fadenrolle 14 weist auf ihrem Umfang eine wendelförmige Führungsrille 18 auf, deren genauer geometrischer Verlauf Fig. 4 zu entnehmen ist.

Die zweite Fadenrolle 14 sitzt drehbar auf einer gehäusefesten Welle 20, die parallel und im seitlichen Abstand zur Welle 19 am Gehäuse 26 befestigt ist.

Die zweite Fadenrolle 14 weist gemäß Fig. 1 auf der Seite ihrer großen Stirnfläche einen koaxialen Hohlraum 21 auf, in welchem eine Spiralfederanordnung 16 vorgesehen ist, die einerseits an einem die Welle 20 tragenden gehäusefesten Zapfen 22 und andererseits an der Umfangswand des Hohlraumes 21 der Fadenrolle 14 befestigt ist. Die Spiralfeder 16 überträgt auf die Fadenrolle 14 ein Drehmoment, welche einen in ihre Führungsrille 18 eingelegten und gemäß Fig. 4 bei 23 befestigte Faden 13 aufzuwickeln sucht. Der Faden 13 erstreckt sich nach den Fig. 1 und 4 von dem engsten Teil der Fadenrolle 14 zu einem damit ausgerichteten Teil der Führungsrille 15 der ersten Fadenrolle 12, wo der Faden 13 bei 24 an der Fadenrolle 12 befestigt ist.

In der aus Fig. 1 und 4 ersichtlichen Wickelposition ist der Faden 13 weitgehend vollständig auf die Fadenrolle 14 aufgewickelt und weitgehend vollständig von der ersten Fadenrolle 12 abgewickelt. In diesem Zustand weist der Gurtwickel 25 auf der Gurtrolle 11 den größten Durchmesser auf, d.h., daß nunmehr eine maximale Gurtlänge auf der Gurtrolle 11 aufgewickelt ist und der Gurt 17 am weitesten eingezogen ist.

Wird nun der Gurt 17 entgegen der Rückzugskraft K in Fig.1 ausgezogen, so dreht sich die erste Fadenrolle 12 in einem solchen Drehsinn, daß der Faden 13 sukzessive auf die erste Fadenrolle 12 aufgewickelt und von der zweiten Fadenrolle 14 abgewickelt wird, wobei er sich zunehmend in die Führungsrille 15 einlegt und aus der Führungsrille 18 entfernt.

Da der Steigungswinkel α, d.h. der Winkel zwischen der geradlinigen Verlängerung der Führungsrillen 15, 18 an den Einmündungsstellen des geradlinigen Fadenstückes 13' und der senkrecht auf der Drehachse 19, 20 stehenden Ebene 42 gleich ist und außerdem durch entsprechende Befestigung der Fadenenden bei 23, 24 dafür gesorgt ist, daß das frei und geradlinig zwischen den Fadenrollen 12, 14 verlaufende Fadenstück 13' knickfrei in die beiden Führungsrillen 15, 18 einmündet, nimmt bei gleichmäßigem axialen Abstand A der Führungsrille 15 auf der ersten Fadenrolle 12 der axiale Abstand B der Windungen der Führungsrille 18 auf der einen größeren Durchmesser aufweisenden Fadenrolle 14 in der aus Fig. 4 ersichtlichen Weise axial zu größerem Durchmesser hin stetig zu.

Daß die Windungen der wendelförmigen Führungsrille 15 auf der ersten Fadenrolle 12 um das gleiche axiale Stück A versetzt sind, bedeutet, daß vom großen zum kleinen Durchmesser der Steigungswinkel sich von α auf β erhöht.

Es wäre auch denkbar, die Führungsrille 15 auf dem Umfang der Fadenrolle 12 so zu führen, daß der Steigungswinkel α konstant ist, was jedoch bedeuten würde, daß der axiale Abstand A benachbarten Windungen der Führungsrille 15 mit kleiner werdendem Durchmesser abnimmt. Dementsprechend wäre auch der axiale Abstand B benachbarter Windungen der Führungsrille 18 der Fadenrolle 14 zu reduzieren und dort der Steigungswinkel konstant zu lassen.

In Fig. 2 ist die Anordnung der beiden gegenläufig konischen Fadenrollen 12, 14 und des aufgewickelten Fadens 13 perspektivisch schematisch veranschaulicht, ohne daß die Führungsrillen 15, 18 gezeigt sind.

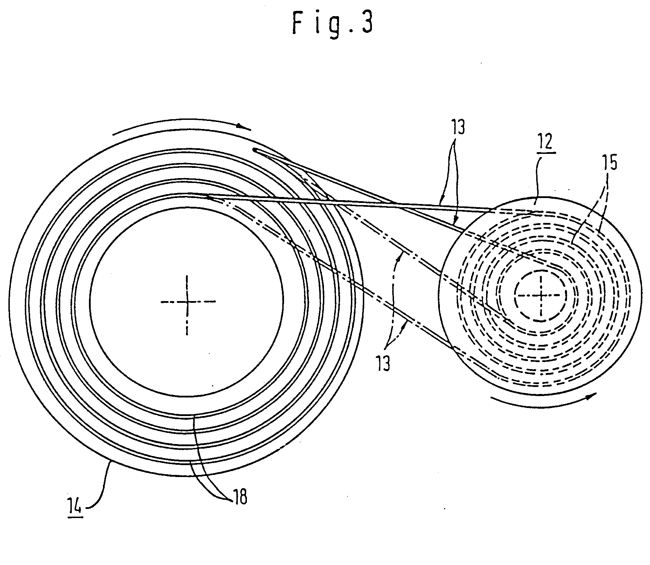

Fig. 3 zeigt bei zwei Ausführungsformen die beiden Endpositionen des Fadens 13 im voll aufgewickelten bzw. voll abgewickelten Zustand auf den beiden Fadenrollen 12 bzw. 14.

Nach Fig. 3 ist der Faden 13 in ausgezogenen Linien über Kreuz tangential an die benachbarten Fadenrollen 12, 14 geführt dargestellt. Strichpunktiert ist der voll aufgewickelte bzw. der voll abgewickelte Zustand des Fadens 13 in einer nicht gekreuzten gleichlaufenden Führung von einer Fadenrolle 12 zur benachbarten Fadenrolle 14 gezeigt.

Der kleinere Durchmesser der Fadenrolle 12 kann z.B. 15 mm oder etwas größer sein, während der größere Durchmesser der kleineren Fadenrolle 12 bei 30 bis 35 mm liegen soll. Dementsprechend ist der kleinere Durchmesser der Fadenrolle 14 30 bis 35 mm und der größere Durchmesser der Fadenrolle 14 100 bis 120 mm.

Nach den Fig. 1, 2 und 4 sind die Enden des Fadens 13 am jeweils größten Umfang der Fadenrollen 12 bzw. 14 mittels radialen Haltestiften 28 befestigt, die mit einem sich vom Stiftteil konisch erweiternden Schraubenkopf 28' versehen sind. Die z.B. als Schrauben ausgebildeten Maltestifte 28 könnten auch axial an der Stirnseite 12'' oder 14'' oder in einer dort vorgesehenen Ausnehmung angeordnet sein, wobei der Faden 13 durch eine geeignete Öffnung am Umfang der Fadenrolle 12 bzw. 14 dorthin geführt werden kann.

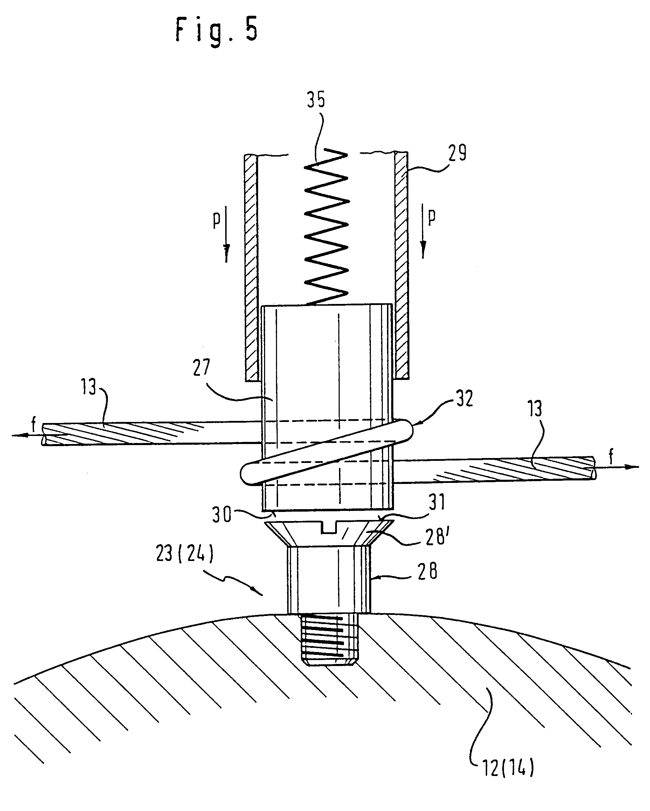

Anhand der Fig. 5 bis 10 wird im folgenden veranschaulicht, wie die Fadenenden an den Haltestiften 28 sicher und knickfrei befestigt werden können.

Nach Fig. 5 ist oberhalb des Haltestiftes 28 einer der Fadenrollen 12 bzw. 14 ein kreiszylindrischer Montagestift 27 derart angeordnet, daß seine freie Stirnseite 30 unmittelbar gegenüber der ebenfalls kreisförmigen Stirnseite 31 des Kopfes 28' des Haltestiftes 28 angeordnet ist oder sogar mit der Stirnseite 31 in Berührung steht. Erfindungsgemäß ist die Dimensionierung der Stirnseiten 30, 31 so, daß sie einander kongruent sind. Allenfalls darf die Stirnseite 30 des Montagestiftes 27 diejenige (31) des Kopfes 28' allseits geringfügig überragen.

Auf den kreiszylindrischen Montagestift 28 ist außen ein hohlzylinderförmiger Abstreifer 29 aufgesetzt, der aus der in Fig. 5 dargestellten Grundposition in Richtung der Pfeile auf dem Montagestift 27 in Fig. 5 nach unten verschiebbar ist. Eine schematisch angedeutete Feder 35 spannt den Abstreifer 29 in Richtung vom Haltestift 28 weg vor, so daß in der Grundposition der Abstreifer 29 von selbst die Position nach Fig. 5 einnimmt und in dieser durch einen nicht gezeigten Anschlag gehalten wird.

Durch einen geeigneten Bewegungsmechanismus wird der Montagestift 27 von der erfindungsgemäßen Vorrichtung so bewegt, daß er aus einem leicht gespannten Faden 13 eine einmal um ihn herumgeführte Schlaufe 32 bildet, wie sie in Fig. 5 gezeigt ist. Hierbei nimmt die Stirnseite 30 eine von der Stirnseite 31 so weit entfernte Position ein, daß der Faden 13 bei der Schlaufenbildung unter der Stirnseite 30 hindurchbewegt werden kann.

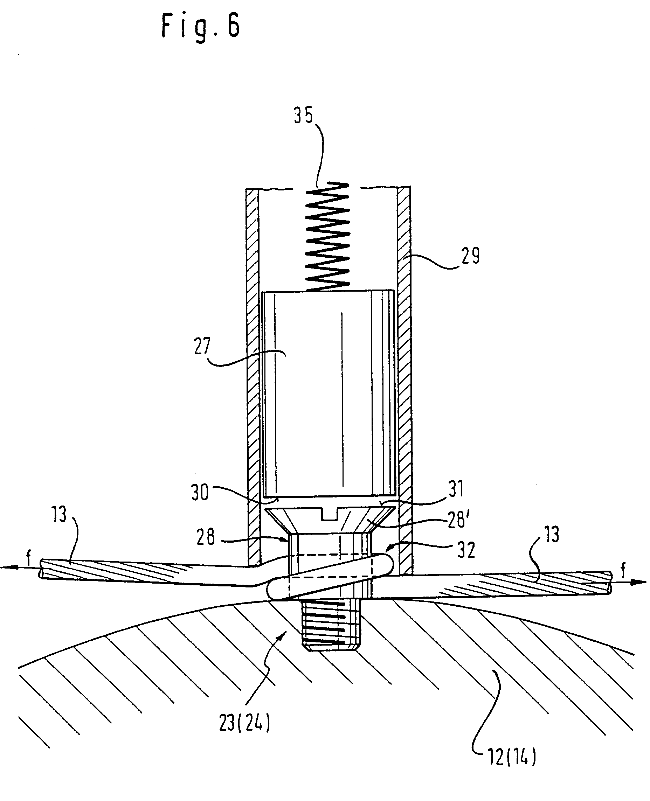

Nach erfolgter Schlaufenbildung wird der Montagestift 27 mit seiner Stirnseite 30 axial auf die Stirnseite 31 des Kopfes 28' des Haltestiftes 28 aufgesetzt oder zumindest gemäß Fig. 5 nahe an die Stirnseite 31 herangebracht, worauf der Abstreifer 29 relativ zum Haltestift 28 in Richtung der Pfeile p nach unten gestoßen wird und die Schlaufe 32 vom Montagestift 27 ab- und auf den Haltestift 28 aufgeschoben wird. Da die leichte Spannung im Faden 13 erhalten bleibt, was durch Pfeile f angedeutet ist, zieht sich die Schlaufe 32 auf dem Haltestift 28 in der aus Fig. 6 ersichtlichen Weise zusammen, so daß sie fest und unverrückbar an der Wurzel des Haltestiftes 28 sitzt.

Nunmehr wird der von der Schlaufe 32 befreite Montagestift 27 von der Stirnseite 31 weggeführt, wobei der Abstreifer 29 durch die Wirkung der Feder 35 wieder in die Ausgangsposition nach Fig. 5 zurückgleitet.

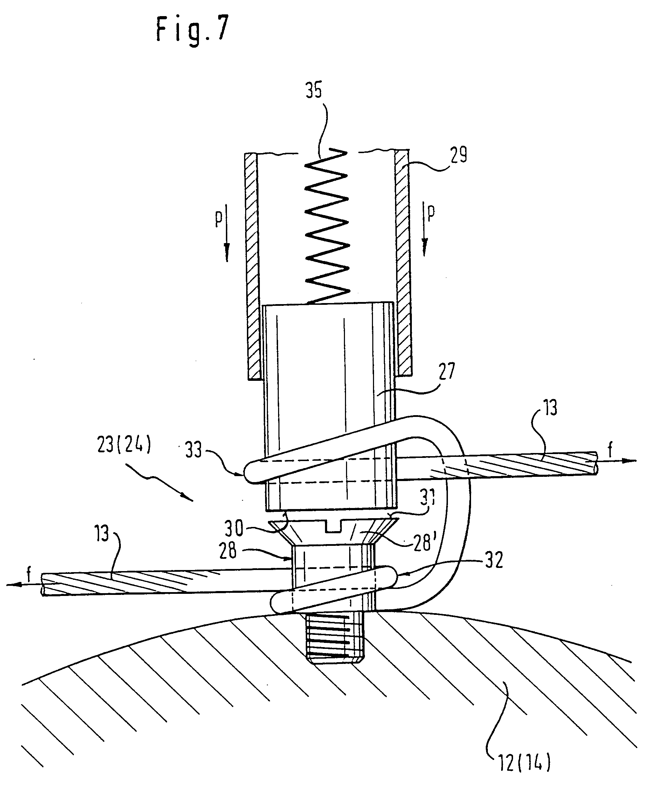

Anschließend wird der Haltestift 28 erneut an das in Fig. 6 rechte Ende des Fadens 13 herangeführt, um eine weitere Schlaufe 33 gemäß Fig. 7 zu bilden. Wichtig ist, daß das untere Ende der Schlaufe 32 ergriffen und die Schlaufe 33 dann analog der Schlaufe 32 nach Fig. 5 um den Montagestift 27 herumgelegt wird.

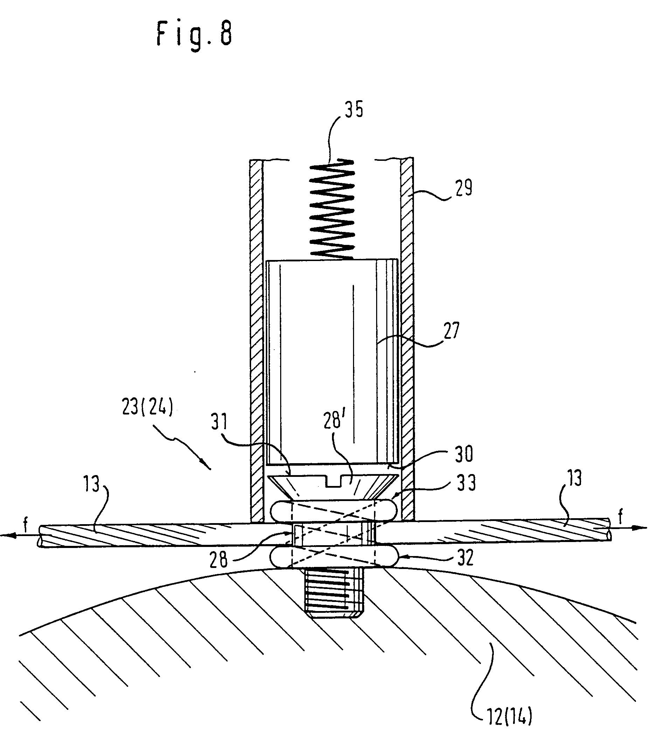

Im nächsten Schritt wird dann die Schlaufe 33 gemäß Fig. 8 ebenfalls auf den Haltestift 28 abgestreift, wo sie sich selbst festzieht und nunmehr bereits eine selbsthemmende Schlaufenbildung vorliegt, die es ermöglicht, den in der einen oder anderen Richtung auf die Fadenrolle 12, 14 aufgewickelten Faden sicher festzuhalten.

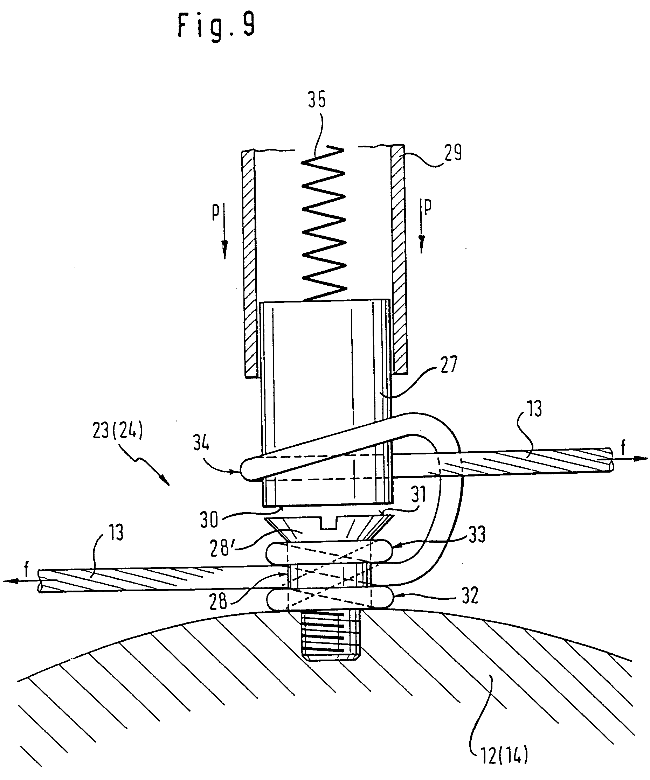

Sicherheitshalber wird aber nach Fig. 9 eine weitere Schlaufe 34 in ähnlicher Weise auf den Montagestift 27 aufgebracht, wie das anhand der Fig. 5 und 7 erläutert worden ist. Auch bei dieser Schlaufe kommt es darauf an, daß jeweils das untere Ende einer bereits gebildeten Schlaufe das obere Ende der neuen Schlaufe bildet, welche ihrerseits mit ihrem in den Faden mündenden Ende der Fadenrolle 12, 14 näher liegt als das Anfangsende der Schlaufe 34.

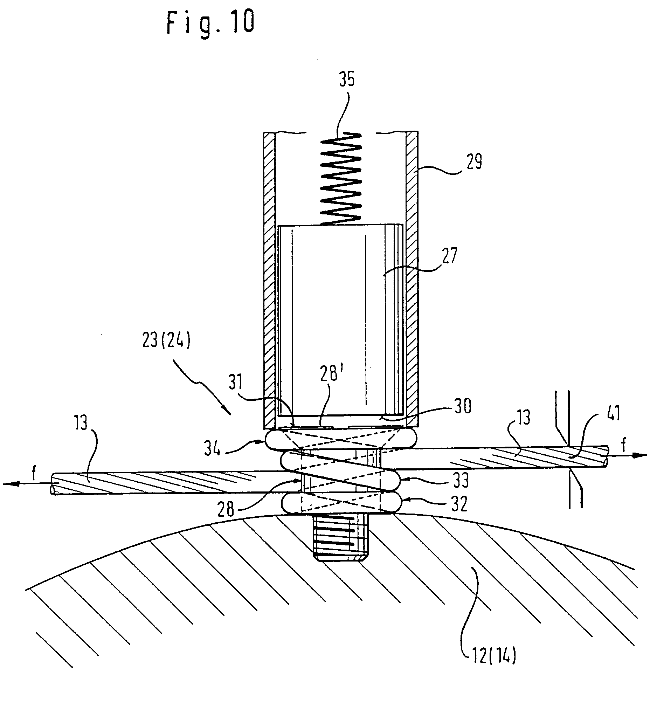

Schließlich wird auch die Schlaufe 34 durch den Abstreifer 29 auf den Haltestift 28 abgestreift, wie das aus Fig. 10 hervorgeht. Auch die letzte Schlaufe 34 zieht sich nunmehr aufgrund der im Faden 13 vorhandenen Spannung selbsttätig zusammen, so daß ein auch über lange Zeiten sicher sitzender Halt des Fadenendes 13 auf dem Haltestift 28 gewährleistet ist.

Bevorzugt geht das am weitesten unten am Haltestift 28 auslaufende Fadenstück auf den Umfang der Fadenrolle 12 bzw. 14 über, während das andere radial außen abgehende Fadenstück beispielsweise an einer Schnittstelle 41 abgeschnitten wird. Grundsätzlich könnte die Anordnung auch umgekehrt sein.

## Patentansprüche

1. Verfahren zum Befestigen des Endes eines unter Zugspannung stehenden Fadens (13) an einer mit dem Faden (13) bewickelten Fadenrolle (12, 14), welche vorzugsweise die erste oder zweite Fadenrolle (12, 14) eines federangetriebenen Aufrollers für Sicherheitsgurte (17) bei Kraftfahrzeugen mit einer Gurtrolle (11) ist, die durch eine bei unfallbedingten Beschleunigungen und/oder bei versuchtem schnellen Auszug des Sicherheitsgurtes (17) auslösbare Auszugssperre (40) gegen Drehung in Auszugsrichtung sperrbar ist und drehfest, insbesondere koaxial und direkt, mit einer ersten, sich in einer Axialrichtung verjüngenden Fadenrolle (12) mit einer wendelförmigen Führungsrille (15) auf ihrem Umfang verbunden ist, welche über den entgegen dem Wickelsinn des Sicherheitsgurtes (17) auf der Gurtrolle (11) in die Führungsrille (15) gewickelten, mit einem Ende an der Fadenrolle (12) befestigten Faden (13) drehfest mit einer weiteren parallel und in seitlicher Ausrichtung zu ihr angeordneten, zweiten sich in entgegengesetzter Axialrichtung verjüngenden Fadenrolle (14) mit einer wendelförmigen Führungsrille (18) verbunden ist, an der das andere Ende des Fadens (13) befestigt und in deren Führungsrille (18) der Faden (13) aufgewickelt ist und die durch eine Federanordnung (16), vorzugsweise eine Spiralfederanordnung, in Aufwickelrichtung des Fadens (13) auf der zweiten Fadenrolle (14) und des Sicherheitsgurtes (17) auf der Gurtrolle (11) vorgespannt ist, wobei die beiden Führungsrillen (15, 18) derart ausgebildet und auf den Fadenrollen (12, 14) angeordnet sind, daß das die beiden Fadenrollen (12, 14) verbindende gespannte Fadenstück (13') zumindest im wesentlichen knickfrei in beide auf den Fadenrollen (12, 14) befindlichen Fadenwindungen übergeht,
dadurch gekennzeichnet, daß
- an der Fadenrolle (12, 14) vorzugsweise radial außen ein Haltestift (28) angeordnet wird, dessen freies Ende zugänglich ist, daß
- eine erste Schlaufe (32) des vorzugsweise unter zumindest leichter Zugspannung gehaltenen Fadens (13) um einen Montagestift (27) mit einem freien Ende herumgelegt wird, daß
- der Montagestift mit seiner freien Stirnseite (30) in geringem Abstand von oder in Berührung mit der freien Stirnseite (31) des Haltestiftes (28) und vorzugsweise in axialer Ausrichtung mit diesem angeordnet wird, daß
- die erste Schlaufe (32) vom Montagestift (27) auf den Haltestift (28) verschoben wird, daß
- der Montagestift (27) wieder vom Haltestift (28) entfernt wird, daß
- eine zweite Schlaufe (33) des Fadens (13) um den Montagestift (27) herumgelegt wird, und zwar derart, daß das an das der Fadenrolle (12, 14) zugewandte Ende der ersten Schlaufe (32) anschließende Fadenstück (13'') analog der ersten Schlaufe (32) um den Montagestift (27) herumgelegt wird, worauf
- erneut der Montagestift (27) mit seiner freien Stirnseite (30) in geringem Abstand von oder in Berührung mit der freien Stirnseite (31) des Haltestiftes (28) und vorzugsweise in axialer Ausrichtung mit diesem angeordnet wird und
- die zweite Schlaufe (33) vom Montagestift (27) auf den Haltestift (28) verschoben wird.

2. Verfahren nach Anspruch 1,
dadurch gekennzeichnet,
daß weitere Schlaufen (34) auf den Montagestift (27) in analoger Weise sukzessive gebildet und auf den Haltestift (28) verschoben werden.

3. Verfahren nach Anspruch 1 oder 2,
dadurch gekennzeichnet,
daß insgesamt drei bis vier Schlaufen (32, 33, 34) gebildet werden.

4. Vorrichtung zum Befestigen des Endes eines unter Zugspannung stehenden Fadens (13) an einer mit dem Faden (13) bewickelten Fadenrolle (12, 14), welche vorzugsweise die erste oder zweite Fadenrolle (12, 14) eines federangetriebenen Aufrollers für Sicherheitsgurte (17) bei Kraftfahrzeugen mit einer Gurtrolle (11) ist, die durch eine bei unfallbedingten Beschleunigungen und/oder bei versuchtem schnellen Auszug des Sicherheitsgurtes (17) auslösbare Auszugssperre (40) gegen Drehung in Auszugsrichtung sperrbar ist und drehfest, insbesondere koaxial und direkt, mit einer ersten, sich in einer Axialrichtung verjüngenden Fadenrolle (12) mit einer wendelförmigen Führungsrille (15) auf ihrem Umfang verbunden ist, welche über den entgegen dem Wickelsinn des Sicherheitsgurtes (17) auf der Gurtrolle (11) in die Führungsrille (15) gewickelten, mit einem Ende an der Fadenrolle (12) befestigten Faden (13) drehfest mit einer weiteren parallel und in seitlicher Ausrichtung zu ihr angeordneten, zweiten sich in entgegengesetzter Axialrichtung verjüngenden Fadenrolle (14) mit einer wendelförmigen Führungsrille (18) verbunden ist, an der das andere Ende des Fadens (13) befestigt und in deren Führungsrille (18) der Faden (13) aufgewickelt ist und die durch eine Federanordnung (16), vorzugsweise eine Spiralfederanordnung, in Aufwickelrichtung des Fadens (13) auf der zweiten Fadenrolle (14) und des Sicherheitsgurtes (17) auf der Gurtrolle (11) vorgespannt ist, wobei die beiden Führungsrillen (15, 18) derart ausgebildet und auf den Fadenrollen (12, 14) angeordnet sind, daß das die beiden Fadenrollen (12, 14) verbindende gespannte Fadenstück (13') zumindest im wesentlichen knickfrei in beide auf den Fadenrollen (12, 14) befindlichen Fadenwindungen übergeht,
dadurch gekennzeichnet,
daß an der Fadenrolle (12, 14) ein Haltestift (28) mit einem freien Ende sowie im Bereich der Fadenrolle (12, 14) ein Montagestift (27) mit einem freien Ende vorgesehen ist, der zur Ausführung einer Schlaufenbildungsbewegung ausgebildet ist und einen Abstreifer (29) aufweist, der bei Anordnung des freien Endes des eine Schlaufe (32, 33, 34) tragenden Montagestiftes (27) gegenüber dem freien Ende des Haltestiftes (28) die Schlaufe (32, 33 bzw. 34) vom Montagestift (27) abstreifen und auf den Haltestift (28) überführen kann.

5. Vorrichtung nach Anspruch 4,
dadurch gekennzeichnet,
daß der Haltestift (28) einen verbreiterten Kopf (28') aufweist und die Stirnseite (30) des Montagestiftes (27) mit der Stirnseite (31) des Haltestiftkopfes (28') im wesentlichen kongruent ist, wenn der Montagestift (27) mit seiner Stirnseite (30) gegenüber der Stirnseite (31) des Haltestiftkopfes (28') in engem Abstand oder in Berührung angeordnet ist.

6. Fadenrolle (12, 14) mit darauf aufgewickeltem Faden (13), insbesondere bei einem federangetriebenen Aufroller für Sicherheitsgurte (17) bei Kraftfahrzeugen mit einer Gurtrolle (11), die durch eine bei unfallbedingten Beschleunigungen und/oder bei versuchtem schnellen Auszug des Sicherheitsgurtes (17) auslösbare Auszugssperre (40) gegen Drehung in Auszugsrichtung sperrbar ist und drehfest, insbesondere koaxial und direkt, mit einer ersten, sich in einer Axialrichtung verjüngenden Fadenrolle (12) mit einer wendelförmigen Führungsrille (15) auf ihrem Umfang verbunden ist, welche über den entgegen dem Wickelsinn des Sicherheitsgurtes (17) auf der Gurtrolle (11) in die Führungsrille (15) gewickelten, mit einem Ende an der Fadenrolle (12) befestigten Faden (13) drehfest mit einer weiteren parallel und in seitlicher Ausrichtung zu ihr angeordneten, zweiten sich in entgegengesetzter Axialrichtung verjüngenden Fadenrolle (14) mit einer wendelförmigen Führungsrille (18) verbunden ist, an der das andere Ende des Fadens (13) befestigt und in deren Führungsrille (18) der Faden (13) aufgewickelt ist und die durch eine Federanordnung (16), vorzugsweise eine Spiralfederanordnung, in Aufwickelrichtung des Fadens (13) auf der zweiten Fadenrolle (14) und des Sicherheitsgurtes (17) auf der Gurtrolle (11) vorgespannt ist, wobei die beiden Führungsrillen (15, 18) derart ausgebildet und auf den Fadenrollen (12, 14) angeordnet sind, daß das die beiden Fadenrollen (12, 14) verbindende gespannte Fadenstück (13') zumindest im wesentlichen knickfrei in beide auf den Fadenrollen (12, 14) befindlichen Fadenwindungen übergeht,
dadurch gekennzeichnet,
daß sie vorzugsweise an ihrem Außenumfang einen Haltestift (28) mit einem zugänglichen Ende aufweist, an dem das Ende des Fadens (13) dadurch befestigt ist, daß mehrere Schlaufen (32, 33, 34) um den Haltestift (28) derart herumgelegt sind, daß jeweils das der Fadenrolle (12, 14) zugewandte Ende jeder Schlaufe (32, 33, 34) gleichzeitig den Anfang der nächsten etwas weiter von der Fadenrolle (12, 14) beabstandeten Schlaufe (33, 34) bildet, deren von der vorangehenden Schlaufe (32, 33) abgewandtes Ende der Fadenrolle (12, 14) näher liegt als das mit ihr verbundene Ende.

7. Fadenrolle nach Anspruch 6,
dadurch gekennzeichnet,
daß der Haltestift (28) einen verbreiterten Kopf (28') aufweist und die Stirnseite (30) des freien Endes des Montagestiftes (27) mit der Stirnseite (31) eines Haltestiftkopfes (28') im wesentlichen kongruent ist, wenn der Montagestift (27) mit seiner Stirnseite (30) gegenüber der Stirnseite (31) des Haltestiftkopfes (28') in engem Abstand oder in Berührung angeordnet ist.

## Claims

1. Method of securing the end of a thread (13) standing under tension to a thread reel (12, 14) which is wound with the thread (13) and which is preferably the first or second thread reel (12, 14) of a spring-driven reeling device for safety belts (17) in motor vehicles having a belt reel (11) which can be blocked against rotation in the pull out direction by a draw-out blocking device (40) in the event of accident-dependent accelerations and/or with an attempted rapid pull out of the safety belt (17) and which is rotationally fixedly connected, in particular coaxially and directly connected, to a first thread reel (12) which tapers in an axial direction and has a spiral guide groove (15) on its periphery, wherein the first thread reel (12) is rotationally fixedly connected via the thread (13), which is wound into the guide groove (15) opposite to the winding sense of the safety belt (17) on the belt reel (11) and is secured at one end to the thread reel (12), to a further, second thread reel (14), which is arranged parallel to and in lateral alignment with the first thread reel, tapers in the opposite axial direction and has a spiral guide groove (18), with the other end of the thread (13) being secured to the further thread reel (14) and being wound into its guide groove (18), wherein the further thread reel is pretensioned by a spring arrangement (16), preferably by a spiral spring arrangement, in the winding up direction of the thread (13) onto the second thread reel (14) and of the safety belt (17) onto the belt reel (11), and wherein the two guide grooves (15, 18) are so designed and arranged on the thread reels (12, 14) that the tensioned thread piece (13') connecting the two thread reels (12, 14) merges in an essentially kink-free manner into the two thread turns located on the thread reels (12, 14), characterised in that
- a holding pin (28) is arranged on the thread reel (12, 14), preferably radially outwardly, with the free end of the holding pin being accessible;
- in that a first loop (32) of the thread (13), which is preferably held at least under light tension, is wound around an installation pin (27) having a free end;
- in that the installation pin is arranged with its free end face (30) at a small distance from or in contact with the free end face (31) of the holding pin (28) and preferably in axial alignment with the latter;
- in that the first loop (32) is shifted from the installation pin (27) onto the holding pin (28);
- in that the installation pin (27) is again removed from the holding pin (28);
- in that a second loop (33) of the thread (13) is laid around the installation pin (27), and indeed in such a way that the thread portion (13'') adjoining the end of the first loop (32) facing the thread reel (12, 14) is laid around the installation pin (27) analogously to the first loop (32), whereupon
- the installation pin (27) is again arranged with its free end face at a small distance from or in contact with the free end face (31) of the holding pin (28) and preferably in axial alignment with the latter, and
- the second loop (33) is shifted from the installation pin (27) onto the holding pin (28).

2. Method in accordance with claim 1, characterised in that further loops (34) are successively formed on the installation pin (27) in analogous manner and are shifted onto the holding pin (28).

3. Method in accordance with claim 1, characterised in that a total of three to four loops (32, 33, 34) are formed.

4. Apparatus for securing the end of a thread (13) standing under tension to a thread reel (12, 14) which is wound with the thread (13) and which is preferably the first or second thread reel (12, 14) of a spring-driven reeling device for safety belts (17) in motor vehicles having a belt reel (11) which can be blocked against rotation in the pull out direction by a draw-out blocking device (40) in the event of accident-dependent accelerations and/or with an attempted rapid pull out of the safety belt (17) and which is rotationally fixedly connected, in particular coaxially and directly connected, to a first thread reel (12) which tapers in an axial direction and has a spiral guide groove (15) on its periphery, wherein the first thread reel (12) is rotationally fixedly connected via the thread (13), which is wound into the guide groove (15) opposite to the winding sense of the safety belt (17) on the belt reel (11) and is secured at one end to the thread reel (12), to a further, second thread reel (14), which is arranged parallel to and in lateral alignment with the first thread reel, tapers in the opposite axial direction and has a spiral guide groove (18), with the other end of the thread (13) being secured to the further thread reel (14) and being wound into its guide groove (18), wherein the further thread reel is pretensioned by a spring arrangement (16), preferably by a spiral spring arrangement, in the winding up direction of the thread (13) onto the second thread reel (14) and of the safety belt (17) onto the belt reel (11), and wherein the two guide grooves (15, 18) are so designed and arranged on the thread reels (12, 14) that the tensioned thread piece (13') connecting the two thread reels (12, 14) merges in an essentially kink-free manner into the two thread turns located on the thread reels (12, 14), characterised in that a holding pin (28) with a free end is provided on the thread reel (12, 14), and also an installation pin (27) with a free end is provided in the region of the thread reel (12, 14), with the installation pin being designed to execute a loop formation movement and having a shifter (29) which, on arrangement of the free end of the installation pin (27) carrying a loop (32, 33, 34) opposite to the free end of the holding pin (28), can shift the loop (32, 33 or 34) from the installation pin (27) and transfer it onto the holding pin (28).

5. Apparatus in accordance with claim 4, characterised in that the holding pin (28) has a broadened head (28') and the end face (30) of the installation pin (27) is at least substantially congruent with the end face (31) of the holding pin head (28') when the installation pin (27) is arranged with its end face (30) opposite to the end face (31) of the holding pin head (28') at a narrow spacing therefrom or in contact therewith.

6. Thread reel (12, 14) with a thread (13) wound thereon, in particular for a spring-driven reeling device for safety belts in motor vehicles having a belt reel (11) which can be blocked against rotation in the pull out direction by a draw-out blocking device (40) in the event of accident-dependent accelerations and/or with an attempted rapid pull out of the safety belt (17) and which is rotationally fixedly connected, in particular coaxially and directly connected, to a first thread reel (12) which tapers in an axial direction and has a spiral guide groove (15) on its periphery, wherein the first thread reel (12) is rotationally fixedly connected via the thread (13, which is wound into the guide groove (15) opposite to the winding sense of the safety belt (17) on the belt reel (11) and is secured at one end to the thread reel (12), to a further, second thread reel (14), which is arranged parallel to and in lateral alignment with the first thread reel, tapers in the opposite axial direction and has a spiral guide groove (18), with the other end of the thread (13) being secured to the further thread reel (14) and being wound into its guide groove (18), wherein the further thread reel is pretensioned by a spring arrangement (16), preferably by a spiral spring arrangement, in the winding up direction of the thread (13) onto the second thread reel (14) and of the safety belt (17) onto the belt reel (11), and wherein the two guide grooves (15, 18) are so designed and arranged on the thread reels (12, 14) that the tensioned thread piece (13') connecting the two thread reels (12, 14) merges in an essentially kink-free manner into the two thread turns located on the thread reels (12, 14), characterised in that it preferably has, at its outer periphery, a holding pin (28) with an accessible end on which the end of the thread (13) is secured by a plurality of loops (32, 33, 34) laid around the holding pin (28) in such a way that in each case the end of each loop (32, 33, 34) facing the thread reel (12, 14) simultaneously forms the start of the next loop (33, 34) spaced somewhat further from the thread reel (12, 14), with the end of said next loop remote from the preceding loop (32, 33) lying closer to the thread reel (12, 14) than the end connected to it.

7. Thread reel in accordance with claim 6, characterised in that the holding pin (28) has a broadened head (28') and the end face (30) of the free end of the installation pin (27) is substantially congruent with the end face (31) of a holding pin head (28') when the installation pin (27) is arranged with its end face (30) opposite to the end face (31) of the holding pin head (28) at a narrow spacing or in contact therewith.

## Revendications

1. Procédé pour attacher l'extrémité d'un fil qui se trouve sous tension (13) sur une bobine à fil (12, 14) sur laquelle est enroulé le fil (13), ladite bobine étant de préférence la première ou la seconde bobine à fil (12, 14) d'un enrouleur à entraînement par ressort pour des ceintures de sécurité (17) dans des véhicules comportant une bobine à ceinture (11), laquelle est susceptible d'être bloquée à l'encontre d'une rotation dans la direction de déroulement par un bloqueur anti-déroulement (40) déclenchable dans le cas d'accélérations provoquées lors d'un accident et/ou lors d'une tentative de faire rapidement dérouler la ceinture de sécurité (17), et est reliée solidaire en rotation, en particulier coaxialement et directement, avec une première bobine à fil (12) qui va en se rétrécissant en direction axiale et présente une gorge de guidage en hélice (15) à sa périphérie, cette bobine à fil étant reliée, par l'intermédiaire du fil enroulé dans la gorge de guidage (15) dans le sens contraire au sens d'enroulement de la ceinture de sécurité (17) sur la bobine à ceinture (11), ledit fil (13) étant fixé par une extrémité à la bobine à fil (12), solidairement en rotation avec une deuxième bobine à fil (14) qui va en se rétrécissant dans la direction axiale opposée et est agencée parallèlement et en alignement latéral vis-à-vis de la première, et dotée d'une gorge de guidage en hélice (18), l'autre extrémité du fil (13) étant fixée sur cette deuxième bobine et le fil étant enroulé dans sa gorge de guidage (18), ladite deuxième bobine étant précontrainte au moyen d'un agencement à ressort (16), de préférence un agencement à ressort spiralé, dans la direction d'embobinage du fil (13) sur la deuxième bobine à fil (14) et de la ceinture de sécurité (17) sur la bobine à ceinture (11), les deux gorges de guidage (15, 18) étant réalisées de telle façon, et agencées de telle manière sur les bobines à fil (12, 14), que le brin de fil (13') tendu qui relie les deux bobines à fil (12, 14), se transforme au moins sensiblement sans coude dans les deux spires de fil qui se trouvent sur les bobines à fil (12, 14),
caractérisé en ce que
- sur la bobine à fil (12, 14) est agencée une tige de maintien (28), de préférence radialement à l'extérieur, dont l'extrémité libre est accessible,
- une première boucle (32) du fil (13) maintenu de préférence au moins sous une légère contrainte de traction, est posée autour d'une tige de montage (27) par une extrémité libre,
- la tige de montage est agencée avec sa face frontale libre (30) à faible distance de la face frontale (31) libre de la tige de maintien (28), ou bien en contact avec celle-ci, et agencée de préférence en alignement axial avec celle-ci,
- la première boucle (32) est déplacée depuis la tige de montage (27) vers la tige de maintien (28),
- la tige de montage (27) est à nouveau éloignée de la tige de maintien (28),
- une deuxième boucle (33) du fil (13) est posée autour de la tige de montage (27), et ceci de telle manière que le brin de fil (13'') qui se raccorde à l'extrémité de la première boucle (32) tournée vers la bobine à fil (12, 14) est posé autour de la tige de montage (27) de manière analogue à la première boucle (32), suite à quoi
- la tige de montage (27) est à nouveau agencée avec sa face frontale libre (30) à faible distance de la face frontale libre (31) de la tige de maintien (28), ou bien en contact avec celle-ci, et de préférence en alignement axial avec celle-ci, et
- la deuxième boucle (33) est déplacée depuis la tige de montage (27) vers la tige de maintien (28).

2. Procédé selon la revendication 1, caractérisé en ce que d'autres boucles (34) sont formées successivement de manière analogue sur la tige de montage (27), et sont déplacées sur la tige de maintien (28).

3. Procédé selon l'une ou l'autre des revendications 1 et 2, caractérisé en ce que l'on forme au total trois à quatre boucles (32, 33, 34).

4. Dispositif pour fixer l'extrémité d'un fil (13) qui se trouve sous tension sur une bobine à fil (12, 14) sur laquelle est enroulé le fil (13), ladite bobine étant de préférence la première ou la seconde bobine à fil (12, 14) d'un enrouleur à entraînement par ressort pour des ceintures de sécurité (17) dans des véhicules comportant une bobine à ceinture (11), laquelle est susceptible d'être bloquée à l'encontre d'une rotation dans la direction de déroulement par un bloqueur anti-déroulement (40) déclenchable dans le cas d'accélérations provoquées lors d'un accident et/ou lors d'une tentative de faire rapidement dérouler la ceinture de sécurité (17), et est reliée solidaire en rotation, en particulier coaxialement et directement, avec une première bobine à fil (12) qui va en se rétrécissant en direction axiale et présente une gorge de guidage en hélice (15) à sa périphérie, cette bobine à fil étant reliée, par l'intermédiaire du fil enroulé dans la gorge de guidage (15) dans le sens contraire au sens d'enroulement de la ceinture de sécurité (17) sur la bobine à ceinture (11), ledit fil (13) étant fixé par une extrémité à la bobine à fil (12), solidairement en rotation avec une deuxième bobine à fil (14) qui va en se rétrécissant dans la direction axiale opposée et est agencée parallèlement et en alignement latéral vis-à-vis de la première, et dotée d'une gorge de guidage en hélice (18), l'autre extrémité du fil (13) étant fixée sur cette deuxième bobine est le fil étant enroulé dans sa gorge de guidage (18), ladite deuxième bobine étant précontrainte au moyen d'un agencement à ressort (16), de préférence un agencement à ressort spiralé, dans la direction d'embobinage du fil (13) sur la deuxième bobine à fil (14) et de la ceinture de sécurité (17) sur la bobine à ceinture (11), les deux gorges de guidage (15, 18) étant réalisées de telle façon, et agencées de telle manière sur les bobines à fil (12, 14), que le brin de fil (13') tendu qui relie les deux bobines à fil (12, 14) se transforme au moins sensiblement sans coude dans les deux spires de fil qui se trouvent sur les bobines à fil (12, 14),
caractérisé en ce que
sur la bobine à fil (12, 14) est prévue une tige de maintien (28) avec une extrémité libre, ainsi que dans la région de la bobine à fil (12, 14) est prévue une tige de montage (27) avec une extrémité libre, laquelle est réalisée pour exécuter un mouvement de formation de boucle, et comporte un élément racleur (29) qui, lorsque l'extrémité libre de la tige de montage (27) portant une boucle (32, 33, 34) est agencée en vis-à-vis de l'extrémité libre de la tige de maintien (28), est capable de venir racler la boucle (32, 33, 34) depuis la tige de montage (27) et la faire passer sur la tige de maintien (28).

5. Dispositif selon la revendication 4, caractérisé en ce que la tige de maintien (28) comporte une tête élargie (28'), et la face frontale (30) de la tige de montage (27) coïncide sensiblement avec la face frontale (31) de la tête (28') de la tige le maintien lorsque la tige de montage (27) est agencée avec sa face frontale (30) à faible distance ou en contact par rapport à la face frontale (31) de la tête (28') de la tige de maintien.

6. Bobine à fil (12, 14) comportant fil (13) enroulé sur elle-même, en particulier pour un enrouleur à entraînement par ressort pour des ceintures de sécurité (17) dans des véhicules comportant une bobine à ceinture (11), laquelle est susceptible d'être bloquée à l'encontre d'une rotation dans la direction de déroulement par un bloqueur anti-déroulement (40) déclenchable dans le cas d'accélérations provoquées lors d'un accident et/ou lors d'une tentative de faire rapidement dérouler la ceinture de sécurité (17), et est reliée solidaire en rotation, en particulier coaxialement et directement, avec une première bobine à fil (12) qui va en se rétrécissant en direction axiale et présente une gorge de guidage en hélice (15) à sa périphérie, cette bobine à fil étant reliée, par l'intermédiaire du fil enroulé dans la gorge de guidage (15) dans le sens contraire au sens d'enroulement de la ceinture de sécurité (17) sur la bobine à ceinture (11), ledit fil (13) étant fixé par une extrémité à la bobine à fil (12), solidairement en rotation avec une deuxième bobine à fil (14) qui va en se rétrécissant dans la direction axiale opposée et est agencée parallèlement et en alignement latéral vis-à-vis de la première, et dotée d'une gorge de guidage en hélice (18), l'autre extrémité du fil (13) étant fixée sur cette deuxième bobine et le fil étant enroulé dans sa gorge de guidage (18), ladite deuxième bobine étant précontrainte au moyen d'un agencement à ressort (16), de préférence un agencement à ressort spiralé, dans la direction d'embobinage du fil (13) sur la deuxième bobine à fil (14) et de la ceinture de sécurité (17) sur la bobine à ceinture (11), les deux gorges de guidage (15, 18) étant réalisées de telle façon, et agencées de telle manière sur les bobines à fil (12, 14), que le brin de fil (13') tendu qui relie les deux bobines à fil (12, 14) se transforme au moins sensiblement sans coude dans les deux spires de fil qui se trouvent sur les bobines à fil (12, 14),
caractérisée en ce que
elle comporte de préférence à sa périphérie extérieure une tige de maintien (28) avec une extrémité accessible, à laquelle l'extrémité du fil (13) est fixée du fait que plusieurs boucles (32, 33, 34) sont posées autour de la tige de maintien (28) de sorte que l'extrémité respective de chaque boucle (32, 33, 34) tournée vers la bobine à fil (12, 14) forme simultanément le début de la boucle suivante (33, 34) légèrement plus éloignée de la bobine à fil (12, 14), dont l'extrémité, détournée de la boucle précédente (32, 33) est située plus proche de la bobine à fil (12, 14) que l'extrémité qui lui est reliée.

7. Bobine à fil selon la revendication 6, caractérisée en ce que la tige de maintien (28) présente une tête élargie (28'), et que la face frontale (30) de l'extrémité libre de la tige de montage (27) coïncide sensiblement avec la face frontale (31) de la tête (28') de la tige de maintien lorsque la tige de montage (27) est agencée avec sa face frontale (30) à faible distance ou en contact par rapport à la face frontale (31) de la tête (28') de la tige de maintien.
